(19) Europäisches Patentamt / European Patent Office / Office européen des brevets

(11) **EP 2 899 461 B1**

(12) **EUROPEAN PATENT SPECIFICATION**

(45) Date of publication and mention
of the grant of the patent:
**31.08.2016  Bulletin 2016/35**

(51) Int Cl.:
*F22B 37/50* *(2006.01)*    *F16T 1/34* *(2006.01)*

(21) Application number: **15152095.4**

(22) Date of filing: **22.01.2015**

(54) **Steam turbine pipe**

Dampfturbinenrohr

Tuyau de turbine à vapeur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2014   JP 2014012623**

(43) Date of publication of application:
**29.07.2015   Bulletin 2015/31**

(73) Proprietor: **Kabushiki Kaisha Toshiba
Tokyo 105-8001 (JP)**

(72) Inventors:
• **Tsutomu, Shioyama
Tokyo, 105-8001 (JP)**

• **Ooishi, Tsutomu
Tokyo, 105-8001 (JP)**
• **Oofuji, Tomoo
Tokyo, 105-8001 (JP)**
• **Watanabe, Masanobu
Tokyo, 105-8001 (JP)**
• **Takeyama, Daiki
Tokyo, 105-8001 (JP)**

(74) Representative: **Hoffmann Eitle
Patent- und Rechtsanwälte PartmbB
Arabellastraße 30
81925 München (DE)**

(56) References cited:
**DE-A1- 2 029 830    DE-A1-102012 207 176**

EP 2 899 461 B1

**Description**

FIELD

Embodiments described herein relate generally to a steam turbine facility comprising a steam turbine pipe.

BACKGROUND

In a steam turbine pipe system, a main steam pipe is provided which leads steam generated in a boiler to a steam turbine. The main steam pipe is provided with a main steam control valve for regulating the flow rate of the steam.

The main steam control valve is provided with a drain pipe that discharges drain generated in the main steam pipe on the downstream side of the main steam control valve when performing warming for operating the steam turbine. The drain pipe is provided with a shutoff valve, and the drain is led to a condenser by opening the shutoff valve. Then, the shutoff valve is closed after completion of the warming.

In the above-described drain pipe provided at the conventional main steam control valve, when increasing a load up to a rated operation of the steam turbine in a state that the shutoff valve is closed, the temperature of the drain pipe between the main steam control valve and the shutoff valve sometimes abnormally increases. Consequently, the abnormal increase in temperature may cause breakage of the drain pipe.

A steam turbine facility comprising a steam turbine pipe as defined in the preamble of claim 1 is described by DE 2 029 830 A. Further, DE 10 2012 207 176 A1 describes a silencer used for waste-steam passages of steam turbine facilities having air condensers.

BRIEF DESCRIPTION OF THE DRAWINGS

Fig. 1 is a perspective view illustrating a configuration of a steam turbine pipe of a first embodiment.

Fig. 2 is a view illustrating a perspective view of main stop valves and main steam control valves provided at the steam turbine pipe of the first embodiment.

Fig. 3 is a diagram schematically illustrating a pipe configuration of a post-valve seat drain pipe of the main steam control valve in the steam turbine pipe of the first embodiment.

Fig. 4 is a view illustrating cross sections of a steam passage of the main steam control valve and a branching passage in the steam turbine pipe of the first embodiment.

Fig. 5 is a view illustrating cross sections of the steam passage of the main steam control valve and a branching passage in another configuration in the steam turbine pipe of the first embodiment.

Fig. 6 is a view illustrating cross sections of the steam passage of the main steam control valve and a branching passage in another configuration in the steam turbine pipe of the first embodiment.

Fig. 7 is a view illustrating cross sections of a steam passage of a main steam control valve and a branching passage in a steam turbine pipe of a second embodiment.

Fig. 8 is a view illustrating cross sections of a steam passage of a main steam control valve and a branching passage in a steam turbine pipe of a third embodiment.

Fig. 9 is a view illustrating cross sections of the steam passage of the main steam control valve and the branching passage in the case in which a heat conduction member is provided in the steam turbine pipe of the first embodiment illustrated in Fig. 4.

Fig. 10 is a schematic diagram for explaining that provision of a reduced part in the branching passage of the first embodiment makes it possible to suppress pressure fluctuation in the pipe.

Fig. 11 is a schematic diagram for explaining that provision of the reduced part in the branching passage of the second embodiment makes it possible to suppress pressure fluctuation in the pipe.

Fig. 12 is a chart illustrating the relation between a ratio (P2/Pi) obtained from Expression (21) and a fluctuation frequency, on the basis of a model of the branching passage of the first embodiment illustrated in Fig. 10 and a model of the branching passage of the second embodiment illustrated in Fig. 11.

Fig. 13 is a chart illustrating evaluation results of temperatures of pipe surfaces of the branching passages.

DETAILED DESCRIPTION

In one embodiment, in a steam turbine facility having a steam turbine pipe, wherein the steam turbine pipe includes: a steam passage that leads steam from a boiler to a steam turbine; a branching passage that branches off from the steam passage; and a shutoff valve that intervenes in the branching passage. The steam turbine pipe further includes a reduced part that is provided at a part of the branching passage between the steam passage and the shutoff valve and made by reducing a passage cross section of the branching passage.

Hereinafter, embodiments of the present invention will be described with reference to the drawings.

(First Embodiment)

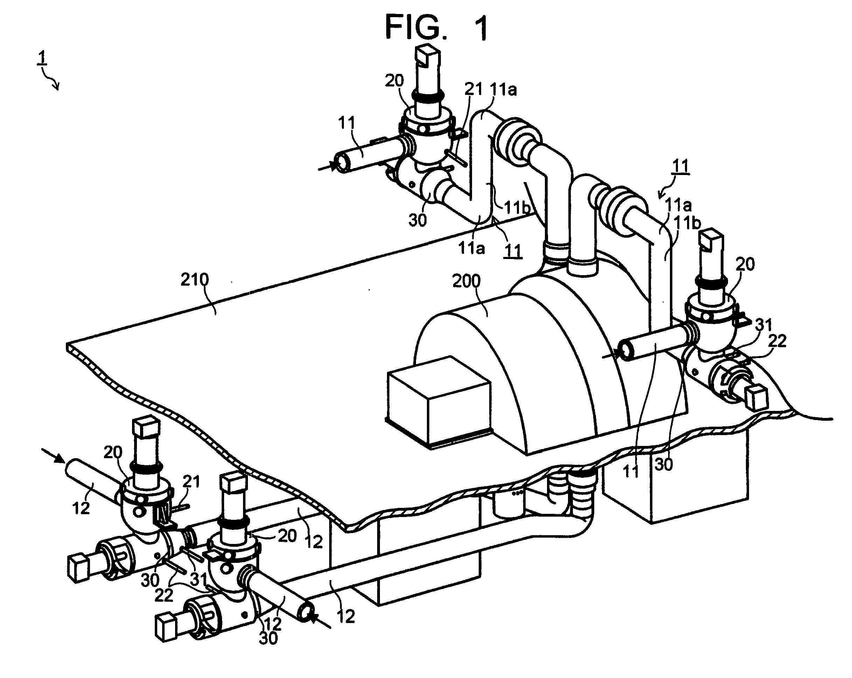

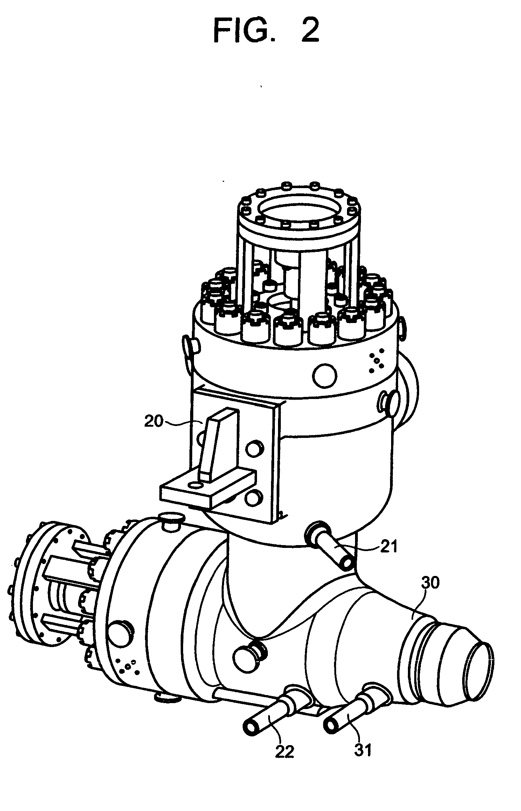

Fig. 1 is a perspective view illustrating a configuration of a steam turbine pipe 1 of a first embodiment. Fig. 2 is a view illustrating a perspective view of main stop valves 20 and main steam control valves 30 provided at the steam turbine pipe 1 of the first embodiment.

As illustrated in Fig. 1, upper half side main steam pipes 11 and lower half side main steam pipes 12 are provided to be able to lead steam from a boiler (not illustrated) to a high-pressure turbine 200. Here, an example in which the upper half side main steam pipes 11 and the lower half side main steam pipes 12 are provided two each is illustrated.

The main stop valves 20 that shut off the steam to be led to the high-pressure turbine 200 intervene in the upper half side main steam pipes 11 and the lower half side main steam pipes 12. Further, the main steam control valves 30 that regulate the flow rate of the steam to be led to the high-pressure turbine 200 intervene on the downstream side of the main stop valves 20.

Fig. 1 illustrates an example in which an upper half part side of the high-pressure turbine 200 and the upper half side main steam pipes 11 (including the main stop valves 20 and the main steam control valves 30) are provided on an upper floor and a lower half part side of the high-pressure turbine 200 and the lower half side main steam pipes 12 (including the main stop valves 20 and the steam control valves 30) are provided on a lower floor via a floor part 210.

As illustrated in Fig. 1, the upper half side main steam pipe 11 on the downstream side of the main steam control valve 30 on the upper half side has, for example, a complicated pipe configuration having a straight pipe 11b between two elbow pipes 11a, for example, in order to make the steam turbine pipe 1 and a steam turbine building compact. On the other hand, the lower half side main steam pipe 12 on the downstream side of the main steam control valve 30 on the lower half side has, for example, a pipe configuration having a horizontal pipe as a main configuration.

As illustrated in Fig. 2, the main stop valve 20 is provided with a pre-valve seat drain pipe 21 for discharging drain on the upstream side of the valve seat, and a post-valve seat drain pipe 22 for discharging drain on the downstream side of the valve seat. The main steam control valve 30 is provided with a post-valve seat drain pipe 31 for discharging drain on the downstream side of the valve seat.

Each of the drain pipes is provided with a shutoff valve (not illustrated), and the end of each drain pipe communicates with, for example, a condenser. By opening the shutoff valve of each drain pipe, the drain is led to the steams condenser. The shutoff valve of each drain pipe is opened in warming the high-pressure turbine 200 to lead, for example, the drain generated in the upper half side main steam pipes 11 and the lower half side main steam pipes 12 to the condenser. The shutoff valve of each drain pipe is closed after completion of the warming.

Next, a pipe configuration of the post-valve seat drain pipe 31 of the main steam control valve 30 in the steam turbine pipe 1 of the first embodiment will be described.

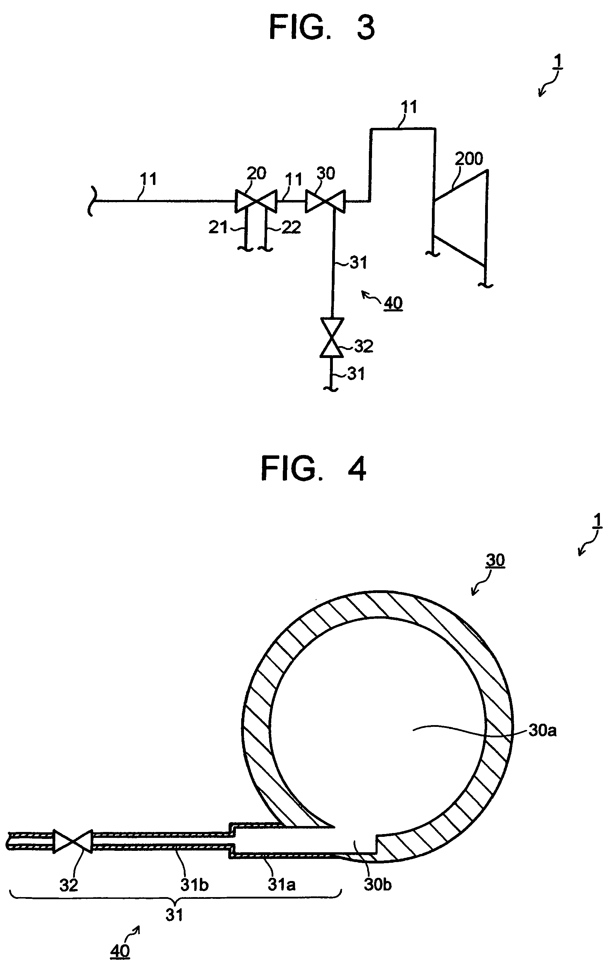

Fig. 3 is a diagram schematically illustrating a pipe configuration of the post-valve seat drain pipe 31 of the main steam control valve 30 in the steam turbine pipe 1 of the first embodiment. Note that the configuration of the post-valve seat drain pipe 31 of the main steam control valve 30 on the upper half side will be described as an example in Fig. 3, and the configuration of the post-valve seat drain pipe 31 of the main steam control valve 30 on the lower half side is the same. Fig. 4 is a view illustrating cross sections of a steam passage 30a of the main steam control valve 30 and a branching passage 40 in the steam turbine pipe 1 of the first embodiment. Note that cross sections perpendicular to the flow direction of the steam passage 30a are illustrated in Fig. 4.

The post-valve seat drain pipe 31 is provided with a shutoff valve 32 as illustrated in Fig. 3 and Fig. 4. Further, the branching passage 40 that branches off from the steam passage 30a of the main steam control valve 30 is composed of a through hole 30b communicating with the steam passage 30a and the post-valve seat drain pipe 31 (passage in the post-valve seat drain pipe 31) provided to communicate with an outside opening of the through hole 30b as illustrated in Fig. 4.

As described above, a part of the branching passage 40 is provided, for example, in a pipe wall of a pipe constituting the steam passage 30a. Further, the branching passage 40 is extended perpendicularly to the flow direction of steam and in an almost horizontal direction, for example, from a lower part of the steam passage 30a as illustrated in Fig. 4.

The post-valve seat drain pipe 31 has a pipe part 31a having the same passage cross-sectional shape as a passage cross-sectional shape of the through hole 30b, and a reduced pipe part 31b having a passage cross section reduced from a passage cross section of the pipe part 31a. In short, the passage cross section of the reduced pipe part 31b is smaller than the passage cross section of the pipe part 31a. As described above, the reduced pipe part 31b is provided at a part of the branching passage 40 between the steam passage 30a and the shutoff valve 32. More specifically, the reduced pipe part 31b is provided at a part of the branching passage 40 on the side closer to the other end (the shutoff valve 32) than is one end side (the steam passage 30a side) of the branching passage 40. For example, as illustrated in Fig. 4, the reduced pipe part 31b is provided between the pipe part 31a and the shutoff valve 32.

The reduced pipe part 31 b functions as a reduced part. Here, as the reduced pipe part 31 b, an example which is connected to the middle of an end part on the shutoff valve 32 side of the pipe part 31 is illustrated. Note the passage cross section is a cross section of the passage, perpendicular to the flow direction (the same applies hereinafter).

Here, assuming that a passage cross-sectional area of the pipe part 31a is 1, a passage cross-sectional area of the reduced pipe part 31b is preferably set to about 1/25 to 1/4 in order that drain smoothly flows even when its flow rate is maximum. Further, the branching passage 40 is inclined downward, for example, at about 0.5 to 1 degree in order to make the drain to flow down toward the shutoff valve 32. The above-described almost horizontal direction includes a direction extended at the downward inclination angle in addition to the horizontal direction (the same applies hereinafter).

Note that at least a part of the branching passage 40 only needs to be extended perpendicularly to the flow direction of steam and in the almost horizontal direction from the lower part of the steam passage 30a. Therefore, the branching passage 40 on a further downstream side may be bent, for example, in a vertically downward direction.

Besides, the branching passage 40 is not limited to be provided in the direction perpendicular to the flow direction of steam. The branching passage 40 only needs to be in a direction almost perpendicular to the flow direction of steam. The almost perpendicular direction includes, for example, a direction inclined at about ±45 degrees with respect to the perpendicular direction in addition to the perpendicular direction (the same applies hereinafter).

Provision of the reduced pipe part 31b as described above makes it possible to reduce resonant vibration in the post-valve seat drain pipe 31 between the steam passage 30a and the shutoff valve 32. This makes it possible to suppress an abnormal increase in temperature of the post-valve seat drain pipe 31 even after the shutoff valve 32 is closed, and prevent breakage of the post-valve seat drain pipe 31.

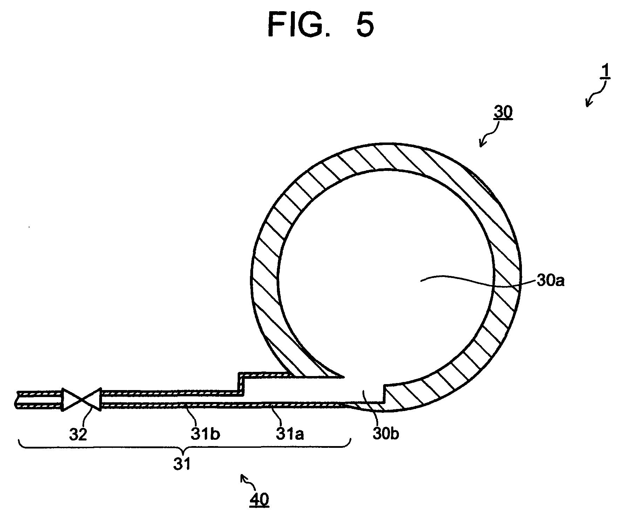

Though the example in which the reduced pipe part 31b is connected to the middle of an end part on the shutoff valve 32 side of the pipe part 31a is illustrated in Fig. 4, the configuration of the branching passage 40 is not limited to this configuration. Fig. 5 is a view illustrating cross sections of the steam passage 30a of the main steam control valve 30 and a branching passage 40 in another configuration in the steam turbine pipe 1 of the first embodiment. Note that cross sections perpendicular to the flow direction of the steam passage 30a are illustrated in Fig. 5.

For example, the reduced pipe part 31b may be connected to a portion lower than the middle of the end part on the shutoff valve 32 side of the pipe part 31a. More specifically, the reduced pipe part 31b may be connected to the end part on the shutoff valve 32 side of the pipe part 31a so that a lower part of an inner wall surface of the reduced pipe part 31b becomes flush with a lower part of an inner wall surface of the pipe part 31a in the cross sections illustrated in Fig. 5.

Connecting the reduced pipe part 31b as described above makes it possible to prevent the drain from staying at a connection part between the pipe part 31a and the reduced pipe part 31b. This makes it possible to suppress an abnormal increase in temperature of the post-valve seat drain pipe 31 and prevent occurrence of hammering in the branching passage 40.

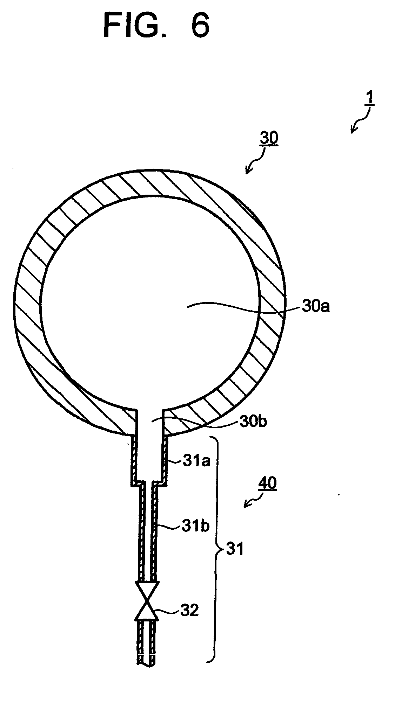

Though the case in which the branching passage 40 is extended perpendicularly to the flow direction of steam and in the almost horizontal direction is illustrated in Fig. 4, the configuration of the branching passage 40 is not limited to this configuration. Fig. 6 is a view illustrating cross sections of the steam passage 30a of the main steam control valve 30 and a branching passage 40 in another configuration in the steam turbine pipe 1 of the first embodiment. Note that cross sections perpendicular to the flow direction of the steam passage 30a are illustrated in Fig. 6.

As illustrated in Fig. 6, the branching passage 40 may be extended in an almost vertically downward direction from a lower part of the steam passage 30a. Configuring the branching passage 40 as described above allows the drain to fall with the force of gravity and therefore prevents the drain from staying on the upstream side of the reduced pipe part 31b. This makes it possible to suppress an abnormal increase in temperature of the post-valve seat drain pipe 31 and prevent occurrence of hammering in the branching passage 40.

Here, it is only necessary to allow the drain to fall with the force of gravity to thereby prevent the drain from staying on the upstream side of the reduced pipe part 31 b in the configuration illustrated in Fig. 6. To this end, the almost vertically downward direction includes, for example, a downward direction inclined, for example, at about ±45 degrees with respect to the vertically downward direction in addition to the vertically downward direction. Note that at least a part of the branching passage 40 only needs to be extended in the almost vertically downward direction from the lower part of the steam passage 30a. Therefore, the branching passage 40 on a further downstream side may be bent, for example, in the horizontal direction.

(Second Embodiment)

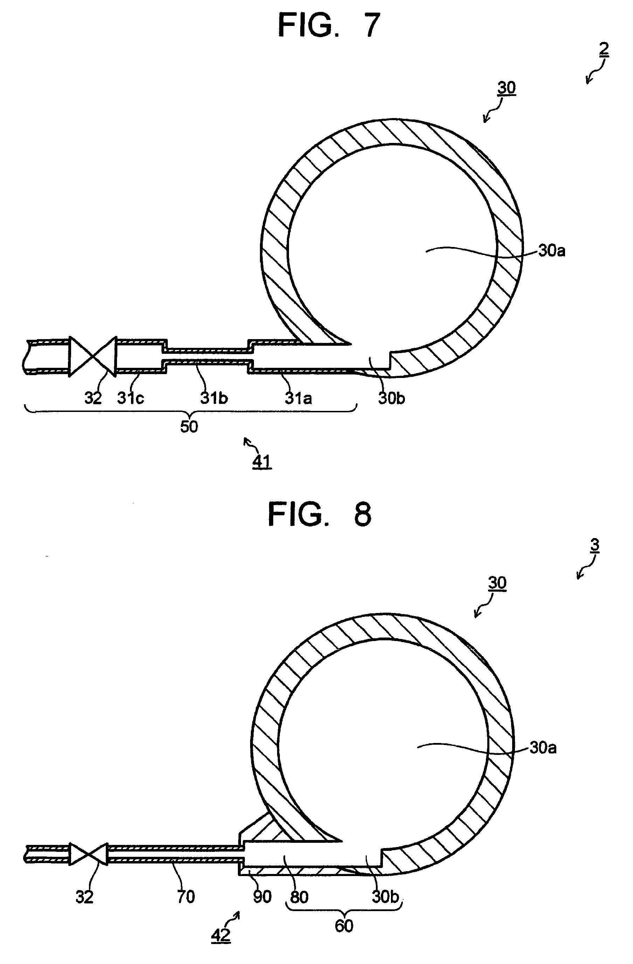

Fig. 7 is a view illustrating cross sections of a steam passage 30a of a main steam control valve 30 and a branching passage 41 in a steam turbine pipe 2 of a second embodiment. Note that cross sections perpendicular to the flow direction of the steam passage 30a are illustrated in Fig. 7. Note that component parts which are the same as those in the configuration of the steam turbine pipe 1 of the first embodiment are given the same reference numerals, and overlapped description thereof will be omitted or simplified in the following embodiments.

In the second embodiment, the configuration of a post-valve seat drain pipe 50 is different from the configuration of the post-valve seat drain pipe 31 of the first embodiment. Therefore, the different configuration will be mainly described here.

The post-valve seat drain pipe 50 is provided with a shutoff valve 32 as illustrated in Fig. 7. A branching passage 41 that branches off from the steam passage 30a of the main steam control valve 30 is composed of a through hole 30b communicating with the steam passage 30a and the post-valve seat drain pipe 50 (passage in the post-valve seat drain pipe 50) provided to communicate with an outside opening of the through hole 30b as illustrated in Fig. 7.

A part of the branching passage 41 is provided, for example, in a pipe wall of a pipe constituting the steam passage 30a. Further, the branching passage 41 is extended perpendicularly to the flow direction of steam and in an almost horizontal direction, for example, from a lower part of the steam passage 30a as illustrated in Fig. 7. The part of the branching passage 41 is provided, for example, in the pipe wall of the pipe constituting the steam passage 30a as illustrated in Fig. 7. Note that the branching passage 41 may be provided, for example, in a direction almost perpendicular to the flow direction of steam flowing through the steam passage 30a.

The post-valve seat drain pipe 50 has a pipe part 31 a having the same passage cross-sectional shape as a passage cross-sectional shape of the through hole 30b, a reduced pipe part 31b having a passage cross section reduced from a passage cross section of the pipe part 31 a, and a pipe part 31c having a passage cross section enlarged from that of the reduced pipe part 31b. In short, the passage cross section of the reduced pipe part 31b is smaller than the passage cross section of the pipe part 31a. The passage cross section of the pipe part 31c is larger than the passage cross section of the reduced pipe part 31 b. The reduced pipe part 31b is provided to have a predetermined length on the shutoff valve 32 side of the pipe part 31 a. Further, the pipe part 31c is provided on the shutoff valve 32 side of the reduced pipe part 31 b. In short, the pipe part 31c is provided between the reduced pipe part 31b and the shutoff valve 32.

A passage cross-sectional area of the pipe part 31c only needs to be larger than a passage cross-sectional area of the reduced pipe part 31b. Assuming that the passage cross-sectional area of the reduced pipe part 31b is 1, the passage cross-sectional area of the pipe part 31c is preferably about 4 to 25 times in order that drain smoothly flows even when its flow rate is maximum. As long as the passage cross-sectional area of the pipe part 31c is larger than the passage cross-sectional area of the reduced pipe part 31b, the passage cross-sectional area of the pipe part 31c may be larger or smaller than, for example, the passage cross-sectional area of the pipe part 31a. Further, the passage cross-sectional area of the pipe part 31c may be made the same as the passage cross-sectional area of the pipe part 31a.

As described above, the reduced pipe part 31b is provided at a part of the branching passage 41 between the steam passage 30a and the shutoff valve 32. Note that the reduced pipe part 31b functions as a reduced part. As the reduced pipe part 31 b, an example which is connected to the middle of an end part on the shutoff valve 32 side of the pipe part 31a and the middle of an end part on the steam passage 30a side of the pipe part 31, is illustrated here.

Provision of the reduced pipe part 31b as described above makes it possible to reduce resonant vibration in the post-valve seat drain pipe 50 between the steam passage 30a and the shutoff valve 32. This makes it possible to suppress an abnormal increase in temperature of the post-valve seat drain pipe 50 even after the shutoff valve 32 is closed, and prevent breakage of the post-valve seat drain pipe 50.

Note that the reduced pipe part 31b may be connected between the pipe part 31a and the pipe part 31c so that a lower part of an inner wall surface of the reduced pipe part 31b becomes flush with lower parts of inner wall surfaces of the pipe part 31a and the pipe part 31c also in the second embodiment as in the configuration in Fig. 5 of the first embodiment.

Besides, the branching passage 41 may be extended in an almost vertically downward direction from a lower part of the steam passage 30a also in the second embodiment as in the configuration in Fig. 6 of the first embodiment. Note that the definition of the almost vertically downward direction is as has been described above.

(Third Embodiment)

Fig. 8 is a view illustrating cross sections of a steam passage 30a of a main steam control valve 30 and a branching passage 42 in a steam turbine pipe 3 of a third embodiment. Note that cross sections perpendicular to the flow direction of the steam passage 30a are illustrated in Fig. 8.

The branching passage 42 that branches off from the steam passage 30a of the main steam control valve 30 is composed of a through hole 60 communicating with the steam passage 30a and a post-valve seat drain pipe 70 (passage in the post-valve seat drain pipe 70) provided to communicate with an outside opening of the through hole 60 as illustrated in Fig. 8.

The branching passage 42 is extended perpendicularly to the flow direction of steam and in an almost horizontal direction, for example, from a lower part of the steam passage 30a as illustrated in Fig. 8. Further, the post-valve seat drain pipe 70 is provided with a shutoff valve 32. Note that the branching passage 42 may be provided, for example, in a direction almost perpendicular to the flow direction of steam flowing through the steam passage 30a.

The through hole 60 is composed of a through hole 30b provided in a pipe wall of a pipe constituting the steam passage 30a and a through hole 80 formed in a heat conduction member 90 provided between the post-valve seat drain pipe 70 and the pipe constituting the steam passage 30a. The shape of the cross section perpendicular to the flow direction of the through hole 30b is formed to be the same, for example, as the shape of the cross section perpendicular to the flow direction of the through hole 80. In short, the through hole 30b and the through hole 80 constitute a part of the branching passage 42 having the same cross-sectional shape.

One end part of the heat conduction member 90 is joined to the pipe constituting the steam passage 30a, for example, by welding. The post-valve seat drain pipe 70 is connected to the other end part of the heat conduction member 90 (the end part on the shutoff valve 32 side). A passage cross section of the post-valve seat drain pipe 70 is reduced to be smaller than a passage cross section formed by the through hole 60. In other words, the post-valve seat drain pipe 70 constitutes a reduced pipe part to function as a recued part.

Here, the heat conduction member 90 conducts heat generated in the branching passage 42 located on the side closer to the steam passage 30a than is the post-valve seat drain pipe 70, to the pipe (main steam control valve 30) constituting the steam passage. Therefore, the heat conduction member 90 is preferably made of, for example, a material having good heat resistance. Further, the heat conduction member 90 is preferably made of, for example, a material better in heat conduction than the material making the pipe (main steam control valve 30) constituting the steam passage 30a. Here, the pipe (main steam control valve 30) constituting the steam passage has a heat capacity enough to absorb the heat quantity conducted thereto via the heat conduction member 90.

The heat conduction member 90 is formed of, for example, a metal material. As the metal material forming the heat conduction member 90, a metal having a high heat conductivity such as copper, carbon steel or the like.

Provision of the heat conduction member 90 as described above allows the heat generated on the side closer to the steam passage 30a than is the post-valve seat drain pipe 70 functioning as a recued part to escape to the pipe (main steam control valve 30) constituting the steam passage. In other words, it is possible to achieve both of an effect of suppressing an abnormal increase in temperature attained by providing the reduced part and an effect of allowing heat to escape attained by providing the heat conduction member 90 in the steam turbine pipe 3 of the third embodiment.

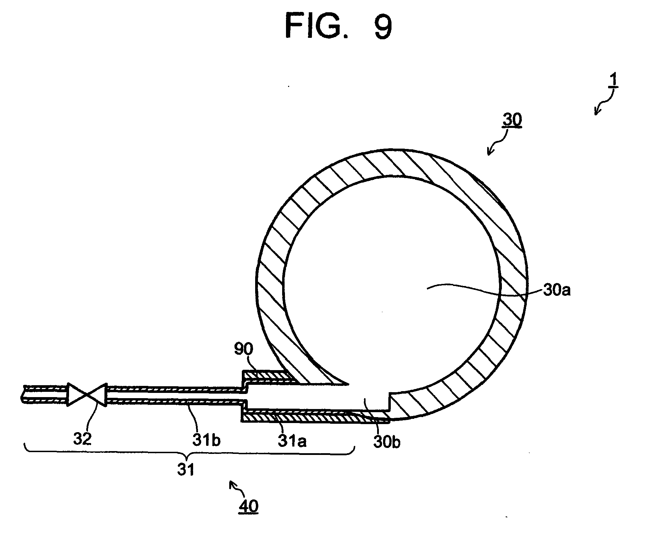

Here, the configuration for allowing the heat generated on the side closer to the steam pipe 30a than is the reduced part to escape to the pipe (main steam control valve 30) constituting the steam passage is not limited to this configuration. Fig. 9 is a view illustrating cross sections of the steam passage 30a of the main steam control valve 30 and the branching passage 40 in the case in which the heat conduction member 90 is provided in the steam turbine pipe 1 of the first embodiment illustrated in Fig. 4.

As illustrated in Fig. 9, the heat conduction member 90 may be provided, for example, at the periphery of the pipe part 31 a. The heat conduction member 90 is in contact with the periphery of the pipe part 31a and in contact with the pipe (main steam control valve 30) constituting the steam passage. Thus, the heat conduction member 90 conducts heat generated in the pipe part 31a located on the side closer to the steam passage 30a than is the reduced pipe part 31b, to the pipe (main steam control valve 30) constituting the steam passage. The heat conduction member 90 is composed of, for example, a metal such as copper or the like having a higher heat conductivity than that of the material making the pipe part 31a.

Besides, as the heat conduction member 90, for example, a double pipe structure having an inner hollow part filled with liquid or the like may be provided. In this case, the heat generated in the pipe part 31a is allowed to escape to the pipe (main steam control valve 30) constituting the steam passage.

Note that the configuration provided with the above-described heat conduction member 90 is also applicable to the case in which the branching passage 40 is extended in the almost vertically downward direction from a lower part of the steam passage 30a. Besides, the configuration provided with the above-described heat conduction member 90 is also applicable to the steam turbine pipe 2 of the second embodiment. In these cases, the same effects as those described above can be achieved.

Here, though the passage including the post-valve seat drain pipe of the main steam control valve 30 has been described as an example of the branching passage that branches off from the steam passage in the above embodiments, the branching passage is not limited to this. For example, the above-described configuration may be applied, for example, to a branching passage (branching pipe) that branches off from a steam passage leading steam from the boiler to the high-pressure turbine 200 and has a shutoff member such as a shutoff valve or the like. Also in this case, it is possible to suppress occurrence of the resonant vibration in the branching passage between the steam passage and the shutoff member and suppress an abnormal increase in temperature in the branching passage.

(Explanation relating to Suppression of Increase in Temperature in Branching Passage in Embodiments)

As described above, provision of the reduced part reduced in passage cross section in the branching passage 40, 41, 42 that branches off from the steam passage 30a of the main steam control valve 30 makes it possible to suppress an abnormal increase in temperature in the branching passage 40, 41, 42 in the above-described embodiments. This can prevent breakage of the branching passage 40, 41, 42.

Here, the reason why provision of the reduced part in the branching passage 40, 41, 42 makes it possible to suppress an abnormal increase in temperature in the branching passage 40, 41, 42 is described.

(1) Explanation of heat generation due to pressure fluctuation in the pipe (thermoacoustic effect)

Here, it is assumed that the frequency of the pressure fluctuation in the pipe of a cylinder with an inside diameter of R is f (Hz). According to Document 1 (Arakawa, Kawahashi, Transaction of the Society of Mechanical Engineers, Vol. 62 No. 598, B (1996), pp.2238-2245), a heat flux q ($W/m^2$) generated by the thermoacoustic effect due to the pressure fluctuation in a boundary layer near a pipe wall can be obtained by Expression (2) using the relation of Expression (1) made by dividing a pressure fluctuation amplitude in the pipe P by an average pressure in the pipe $P_0$ and making the dimensionless.

[Mathematical Expression 1]

$$P_1 = P/P_0 \qquad \text{... Expression (1)}$$

[Mathematical Expression 2]

$$q = K \times \left(\frac{1}{\gamma}\right)^2 \left(\frac{\mu a^2}{\delta/5}\right) P_1^2 \qquad \text{... Expression (2)}$$

Here, $P_1$ is a dimensionless pressure amplitude, K is a constant decided by a pipe shape, y is a specific heat ratio, $\mu$ is a viscosity coefficient, a is a sound speed, $\delta$ is a thickness of the boundary layer, and R is an inside diameter of the cylinder.

Since the inner perimeter of the cylinder is $\pi R$, a heating value Q (W/m) per unit length of the cylinder is obtained by Expression (3).

[Mathematical Expression 3]

$$Q = K \times \left(\frac{1}{\gamma}\right)^2 \left(\frac{\mu a^2}{\delta/5}\right) P_1^2 \pi R \qquad \text{... Expression (3)}$$

Assuming here that an angular frequency $\omega$ is 2 $\pi f$, the thickness $\delta$ of the boundary layer is obtained by Expression (4).

[Mathematical Expression 4]

$$\delta = 5\sqrt{\frac{v}{\omega}} \qquad \text{... Expression (4)}$$

Here, v is a kinematic viscosity coefficient.

Namely, as is clear from Expression (3), the heat generation due to pressure fluctuation in the pipe (thermoacoustic effect) is proportional to the square of the dimensionless pressure amplitude. Therefore, it is found that the heat generation is suppressed by suppressing the pressure fluctuation in the pipe.

(2) Explanation that provision of the reduced part in the branching passage makes it possible to suppress the pressure fluctuation in the pipe

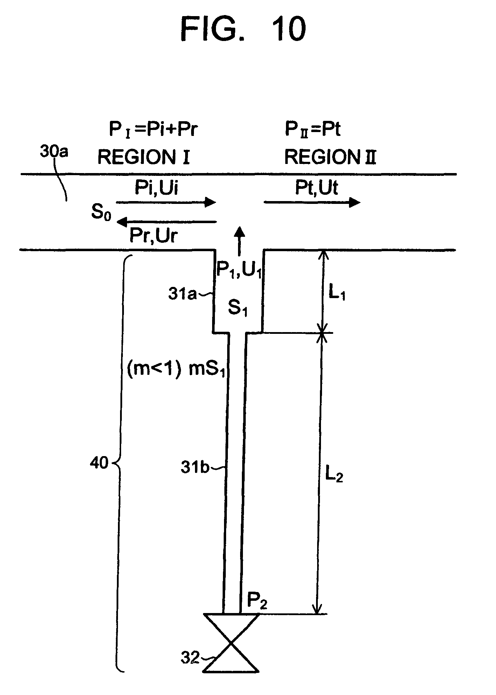

Next, the fact that provision of the reduced part in the branching passage 40, 41, 42 makes it possible to suppress the pressure fluctuation in the pipe is explained referring to Fig. 10.

Fig. 10 is a schematic diagram for explaining that provision of the reduced part in the branching passage 40 of the first embodiment makes it possible to suppress the pressure fluctuation in the pipe. The schematic diagram illustrated in Fig. 10 uses the branching passage 40 of the first embodiment illustrated in Fig. 4 as a model. Note that the shutoff valve 32 is assumed to be closed.

As illustrated in Fig. 10, the branching passage 40 branches off from the steam passage 30a of the main steam control valve 30 having a passage cross-sectional area $S_0$. The branching passage 40 includes the pipe part 31a and the reduced pipe part 31b. Note that the through hole 30b having the same passage cross section as that of the pipe part 31a is included in the pipe part 31a for convenience of explanation here.

The passage cross-sectional area of the pipe part 31a is $S_1$, and the length of the pipe part 31a is $L_1$. The passage cross-sectional area of the reduced pipe part 31b is $mS_1$, and the length of the reduced pipe part 31b is $L_2$. Note that m is a constant smaller than 1. The pressure fluctuation at the end part on the shutoff valve 32 side of the reduced pipe part 31b is $P_2$.

Regarding the pressure fluctuation and the speed fluctuation of steam, portions flowing from the upstream side of the steam passage 30a into the connection part between the pipe part 31a and the steam passage 30a are Pi, Ui, portions reflected to the upstream side of the steam passage 30a from the connection part are Pr, Ur, portions flowing out to the downstream side of the steam passage 30a from the connection part are Pt, Ut, and portions flowing out to the steam passage 30a from the pipe part 31a via the connection part are $P_1$, $U_1$.

A region on the upstream side of the connection part of the steam passage 30a is I and a region on the downstream side of the connection part of the steam passage 30a is II. The pressure fluctuation and the speed fluctuation of steam in the region I are $P_I$, $U_I$, and the pressure fluctuation and the speed fluctuation of steam in the region II are $P_{II}$, $U_{II}$.

Assuming that the pressure fluctuation in the steam passage 30a is a plane progressive wave, a steam density is $\rho_0$, and a steam sound speed is $C_0$, $U = P/(\rho_0 C_0)$ is established. Therefore, the relations in the following Expression (5) to Expression (8) can be obtained.

[Mathematical Expression 5]

$$P_I = Pi + Pr \qquad \text{... Expression (5)}$$

[Mathematical Expression 6]

$$S_I U_I = S_0 (Ui + Ur) = \frac{S_0}{\rho_0 c_0}(Pi - Pr) \qquad \text{... Expression (6)}$$

[Mathematical Expression 7]

$$P_{II} = Pt \qquad \text{... Expression (7)}$$

[Mathematical Expression 8]

$$S_{II} U_{II} = S_0 Ut = \frac{S_0}{\rho_0 c_0} Pt \qquad \text{... Expression (8)}$$

Here, the sound pressures on the upstream side and the downstream side of the connection part are equal. Further, regarding the volume velocity, the relations in the following Expression (9) and Expression (10) are obtained in consideration of a portion ($S_1 U_1$) flowing out to the steam passage 30a from the pipe part 31a via the connection part.

[Mathematical Expression 9]

$$P_I = P_{II} \Rightarrow Pi + Pr + Pt \text{... Expression (9)}$$

[Mathematical Expression 10]

$$S_I U_I = S_{II} U_{II} + S_1 U_1 = S_{II} U_{II} + \frac{P_{II}}{Z_1} \Rightarrow$$

$$\frac{S_0}{\rho_0 c_0}(Pi - Pr) = \left(\frac{S_0}{\rho_0 c_0} + \frac{1}{Z_1}\right)(Pi + Pr)$$

... Expression (10)

Here, $Z_1$ is an acoustic impedance ($P_1/(S_1 U_1)$) including the reflection in the pipe part 31a at the opening part of the pipe part 31a.

From Expression (6), the following Expression (11) is established.
[Mathematical Expression 11]

$$Pi = -\left(1 + \frac{2S_0}{\rho_0 c_0} Z_1\right) Pr$$

... Expression (11)

The pressure fluctuation $P_1$ in the connection part is expressed by Expression (12) from the relation of $P_1 = P_1 = (Pi + Pr)$.
[Mathematical Expression 12]

$$P_1 = \frac{\dfrac{2S_0}{\rho_0 c_0} Z_1}{1 + \dfrac{2S_0}{\rho_0 c_0} Z_1} Pi$$

... Expression (12)

Then, in the pipe configuration illustrated in Fig. 10, the following Expression (13) is established in the branching passage 40 including the pipe part 31a and the reduced pipe part 31b.
[Mathematical Expression 13]

$$\begin{pmatrix} P_1 \\ S_1 U_1 \end{pmatrix} = \begin{bmatrix} \cosh \gamma_1 L_1 & \dfrac{z_1}{S_1}\sinh \gamma_1 L_1 \\ \dfrac{S_1}{z_1}\sinh \gamma_1 L_1 & \cosh \gamma_1 L_1 \end{bmatrix} \begin{bmatrix} \cosh \gamma_2 L_2 & \dfrac{z_2}{mS_1}\sinh \gamma_2 L_2 \\ \dfrac{mS_1}{z_2}\sinh \gamma_2 L_2 & \cosh \gamma_2 L_2 \end{bmatrix} \begin{pmatrix} P_2 \\ 0 \end{pmatrix}$$

... Expression (13)

According to Document 2 (Ichikawa, Takayama, Transaction of the Society of Mechanical Engineers, Vol. 39 No. 325, (1973), pp.2807-2815), a propagation constant yi (i = 1, 2, 3) is approximated by the following Expression (14), Expression (15) approximating the viscos friction of flow in the pipe part 31a.
[Mathematical Expression 14]

$$\gamma_1 = \frac{j\omega}{c_0}\left(1 - \frac{1}{r_1/2\sqrt{j\omega/\nu}}\right)$$

... Expression (14)

[Mathematical Expression 15]

$$\gamma_2 = \frac{j\omega}{c_0}\left(1 - \frac{1}{r_2/2\sqrt{j\omega/v}}\right)$$

... Expression (15)

Here, j is an imaginary unit and $\omega$ is an angular frequency.

Further, a characteristic impedance Zi (i = 1, 2, 3) is approximated by the following Expression (16), Expression (17).

[Mathematical Expression 16]

$$z_1 = \rho_0 c_0\left(1 - \frac{1}{r_1/2\sqrt{j\omega/v}}\right)$$

... Expression (16)

[Mathematical Expression 17]

$$z_2 = \rho_0 c_0\left(1 - \frac{1}{r_2/2\sqrt{j\omega/v}}\right)$$

... Expression (17)

Then, a propagator matrix T is defined as in the following Expression (18).

[Mathematical Expression 18]

$$T = \begin{bmatrix} t_{11} & t_{12} \\ t_{21} & t_{22} \end{bmatrix} = \begin{bmatrix} \cosh\gamma_1 L_1 & \frac{z_1}{S_1}\sinh\gamma_1 L_1 \\ \frac{S_1}{z_1}\sinh\gamma_1 L_1 & \cosh\gamma_1 L_1 \end{bmatrix}\begin{bmatrix} \cosh\gamma_2 L_2 & \frac{z_2}{mS_1}\sinh\gamma_2 L_2 \\ \frac{mS_1}{z_2}\sinh\gamma_2 L_2 & \cosh\gamma_2 L_2 \end{bmatrix}$$

... Expression (18)

Further, from Expression (13), $Z_1 = t_{11}/t_{21}$ is obtained. T' being an inverse of the matrix T is expressed by the following Expression (19).

[Mathematical Expression 19]

$$T' = \begin{bmatrix} t'_{11} & t'_{12} \\ t'_{21} & t'_{22} \end{bmatrix}$$

... Expression (19)

Then, the relation of the following Expression (20) is obtained.

[Mathematical Expression 20]

$$\begin{pmatrix} P_2 \\ 0 \end{pmatrix} = T'\begin{pmatrix} P_1 \\ S_1 U_1 \end{pmatrix} = \begin{bmatrix} t'_{11} & t'_{12} \\ t'_{21} & t'_{22} \end{bmatrix}\begin{pmatrix} 1 \\ 1/Z_1 \end{pmatrix}P_1 = \begin{bmatrix} t'_{11} & t'_{12} \\ t'_{21} & t'_{22} \end{bmatrix}\begin{pmatrix} 1 \\ 1/Z_1 \end{pmatrix}\frac{\frac{2S_0}{\rho_0 c_0}Z_1}{1 + \frac{2S_0}{\rho_0 c_0}Z_1}Pi$$

... Expression (20)

From Expression (20), a ratio ($P_2/Pi$) between the pressure fluctuation Pi in the steam passage 30a on the upstream side of the connection part and the pressure fluctuation $P_2$ at the end part on the shutoff valve 32 side of the reduced pipe part 31b is obtained as the following Expression (21).
[Mathematical Expression 21]

$$\frac{P_2}{Pi} = \left( t'_{11} + \frac{t'_{12}}{Z_1} \right) \frac{\dfrac{2S_0}{\rho_0 c_0} Z_1}{1 + \dfrac{2S_0}{\rho_0 c_0} Z_1} \qquad \text{... Expression (21)}$$

Note that the above Expression (21) is obtained using the branching passage 40 of the first embodiment illustrated in Fig. 4 as a model as illustrated in Fig. 10. On the other hand, the ratio ($P_2/Pi$) can also be obtained even using the branching passage 42 of the third embodiment illustrated in Fig. 8 as a model.

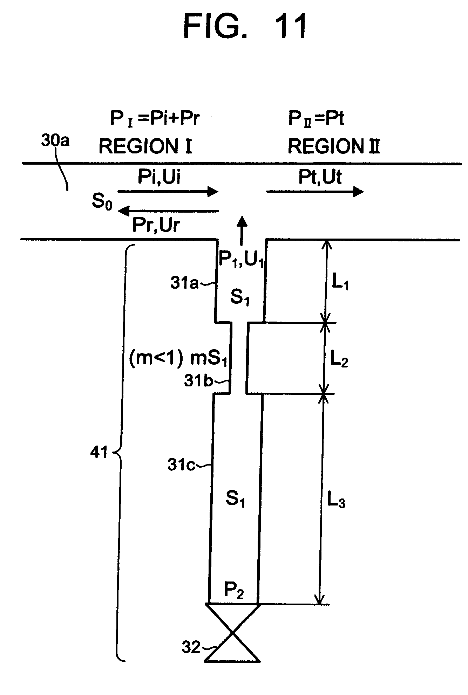

Besides, the ratio ($P_2/Pi$) can also be obtained similarly to the above even using the branching passage 41 of the second embodiment illustrated in Fig. 7 as a model. Fig. 11 is a schematic diagram for explaining that provision of the reduced part in the branching passage 41 of the second embodiment makes it possible to suppress the pressure fluctuation in the pipe. Note that reference numerals in Fig. 11 which are the same as those illustrated in Fig. 10 have the same definitions as those of the reference numerals illustrated in Fig. 10.

A passage cross-sectional area of the pipe part 31c provided between the reduced pipe part 31b and the shutoff valve 32 is larger than a passage cross-sectional area of the reduced pipe part 31b in Fig. 11. The passage cross-sectional area of the pipe part 31c is expressed by $nmS1$. Note that n is a constant larger than 1. Besides, the length of the pipe part 31c is $L_3$. Also in the configuration in Fig. 11 having the pipe part 31c, the ratio ($P_2/Pi$) can be obtained by Expression (21).

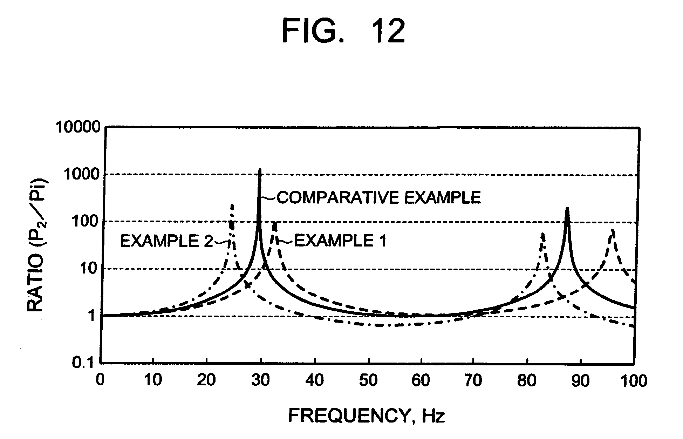

Fig. 12 is a chart illustrating the relation between the ratio ($P_2/Pi$) obtained from Expression (21) and the fluctuation frequency on the basis of the model of the branching passage 40 of the first embodiment illustrated in Fig. 10 and the model of the branching passage 41 of the second embodiment illustrated in Fig. 11. Further, Fig. 12 also illustrates a case without the reduced pipe part 31b as Comparative Example. Note that the ratio ($P_2/Pi$) indicated on the vertical axis is made by dividing the absolute value of $P_2$ by the absolute value of Pi.

As steam conditions, the temperature was set to 350°C, the pressure was set to 5 MPa, the density $\rho_0$ was set to 19.2 kg/m³, the sound speed was set to 578 m/s, and the kinematic viscosity coefficient v was set to $1.1 \times 10^{-6}$ m²/s.

As the pipe shape of the model illustrated in Fig. 10 used as Example 1, the passage cross-sectional area $S_0$ of the steam passage 30a was set to 0.051 m² (corresponding to an inside diameter of 0.254 m). The passage cross-sectional area S, of the pipe part 31a was set to 0.0016 m² (corresponding to an inside diameter of 0.045 m), its length $L_1$ was set to 0.5 m, and the length $L_2$ of the reduced pipe part 31b was set to 4.5 m. The constant m was set to 1/9.

In the pipe shape of the model illustrated in Fig. 11 used as Example 2, the passage cross-sectional area So of the steam passage 30a was set to 0.051 m² (corresponding to an inside diameter of 0.254 m). The passage cross-sectional area $S_1$ of the pipe part 31a was set to 0.0016 m² (corresponding to an inside diameter of 0.045 m), the length $L_1$ of the pipe part 31a was set to 0.5 m. The length $L_2$ of the reduced pipe part 31 b was set to 0.5 m, and the length $L_3$ of the pipe part 31c was set to 4 m. The constant m was set to 1/9 and the constant n was set to 4.

In the pipe shape of the branching passage without the reduced pipe part 31b used as Comparative Example, the passage cross-sectional area was uniformly set to 0.0016 m² (corresponding to an inside diameter of 0.045 m), its length was set to 5 m. Note that in the pipe shape in Comparative Example, when it is used under the aforementioned steam conditions, an abnormal increase in temperature in the branching passage arises to break the pipe.

As illustrated in Fig. 12, the ratio ($P_2/P_1$) is maximized at 29 Hz and 87Hz in Comparative Example. A maximized frequency is a standing wave frequency decided by the total length (hereinafter, referred to as a branching passage total length) of the branching passage until the shutoff valve 32 and the sound speed $C_0$. In the pipe with a uniform inside diameter, a value obtained by dividing the sound speed by the quadruple of the branching passage total length is a fundamental frequency, and a frequency of an odd multiple thereof is the standing wave frequency under the condition that one end is closed and the other end is opened.

About 29 Hz that is the value obtained by dividing the sound speed $C_0$ (578 m/s) by 20 m that is the quadruple of the branching passage total length (5 m) is the fundamental frequency. In Comparative Example, the odd multiple of the fundamental frequency is the standing wave frequency and is found to coincide with the maximized frequency illustrated in Fig. 12. Besides, the ratio ($P_2/Pi$) is maximum at 29 Hz corresponding to the fundamental frequency. In Comparative Example, the pressure fluctuation in the pipe of the fundamental standing wave is largest as compared to Example 1 and Example 2.

Here, it is known that the heat generation by the fundamental standing wave is largest in the heat generation by the thermoacoustic effect. This is shown as characteristics of Haltman tube in the aforementioned Document 1 and Document 3 (Sprenger, H., "On thermal effects in resonance tubes", NTRS, 1964).

In Example 1, as illustrated in Fig. 12, the maximized frequencies of the ratio ($P_2$/Pi) are 31.9 Hz and 95.4 Hz. The maximum value of the ratio ($P_2$/Pi) is suppressed to about 1/10 of the maximum value of Comparative Example. As it found from Expression (3), the heat generation by the thermoacoustic effect is proportional to the square of the pressure fluctuation. Therefore, when the pressure fluctuation is suppressed to 1/10, the heat generation becomes 1/100, resulting in a sufficient heat generation suppression effect.

In Example 2, as illustrated in Fig. 12, the maximized frequencies of the ratio ($P_2$/Pi) are 24.1 Hz and 82.3 Hz. The maximum value of the ratio ($P_2$/Pi) is suppressed to about 1/5 of the maximum value of Comparative Example. As it found from Expression (3), the heat generation by the thermoacoustic effect is proportional to the square of the pressure fluctuation. Therefore, when the pressure fluctuation is suppressed to 1/5, the heat generation becomes 1/25, resulting in a sufficient heat generation suppression effect.

Here, it is considered that breakage due to overheating can be normally avoided if the heat generation is about 1/9 to 1/10 though depending on the heat-insulating condition of the pipe part 31a. Therefore, suppression of the pressure fluctuation to 1/3 or less of the pressure fluctuation of Comparative Example causing breakage is considered to be sufficient. Consequently, in order to prevent breakage of the pipe due to an abnormal increase in temperature, it is only necessary to decide the specifications of the branching passage so that the ratio ($P_2$/Pi) of the pressure fluctuation obtained from the aforementioned Expression (21) becomes, for example, 1/3 or less.

(3) Evaluation of suppression of an abnormal increase in temperature by provision of the reduced part in the branching passage

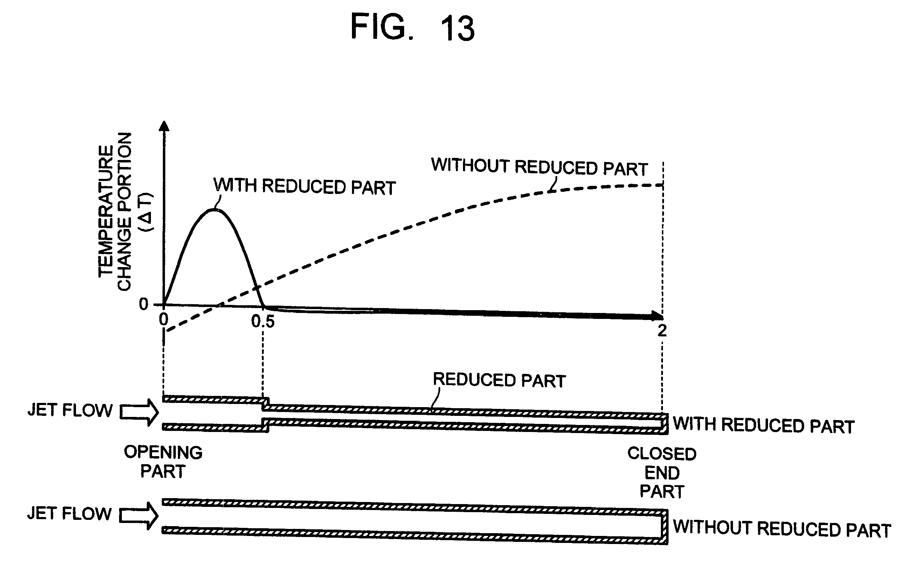

Here, temperature changes of the pipe surfaces of the branching passages in the case with the reduced part and the case without the reduced part were evaluated. Fig. 13 is a chart illustrating the evaluation results of the temperature changes of the pipe surfaces of the branching passages. The vertical axis in Fig. 13 indicates a temperature change portion ($\Delta$T) from an initial temperature of a jet flow. For example, the upper side of "$\Delta$T = 0" means a temperature increase, and the lower side thereof means a temperature decrease.

Note that Fig. 13 illustrates a schematic chart of the branching passages used in this evaluation together with the evaluation results of the temperature changes. One end of the branching passage is an opening part and the other end is a closed part.

The pipe with the reduced part was made to have an inside diameter of 30 mm to a position of a length of 0.5 m from the opening part (corresponding to the connection part) and to have an inside diameter of 10 mm on the downstream side (the closed end side) of the position. A portion with the smaller inside diameter is the reduced part. The total length of the pipe was 2 m.

The pipe without the reduced part was made to have an inside diameter of 30 mm from the opening part (corresponding to the connection part) to the closed end part. The total length of the pipe was 2 m. The temperature of the jet flow jetted to the opening part was the same both in the case with the reduced part and the case without the reduced part.

As illustrated in Fig. 13, in the pipe without the reduced part, the temperature increase becomes larger from the opening part toward the closed end part and the temperature increase becomes maximum at the closed end part.

On the other hand, in the pipe with the reduced part, any temperature increase is not recognized in the reduced part and overheating is prevented. However, at the portion from the opening part to the reduced part, the temperature increase is large. This is considered to be caused by the following reasons. At the closed end part in the case with the reduced part, overheating due to the thermoacoustic effect can be prevented by suppressing the pressure fluctuation as expressed in Expression (21). In contrast, the portion from the opening part to the reduced part, the pressure reflection at the reduced part returns to the opening part side, so that the pressure fluctuation increases to cause heat generation due to the thermoacoustic effect.

Here, even when the temperature increase is large at the portion from the opening part to the reduced part, an abnormal temperature increase can be suppressed by deciding the specifications of the branching passage so that the ratio ($P_2$/Pi) of the pressure fluctuation obtained from the aforementioned Expression (21) becomes, for example, 1/3 or less.

Further, provision of the heat conduction member 90 in the third embodiment allows the heat generated in the portion from the opening part to the reduced part to escape to the pipe (main steam control valve 30) constituting the steam passage.

According to the above-described embodiments, it becomes possible to provide a steam turbine pipe that prevents an abnormal increase in temperature in a steam turbine pipe system and has a high reliability.

**Claims**

1. A steam turbine facility comprising a steam turbine pipe, the steam turbine pipe comprising:

   a steam passage (30a) that leads steam from a boiler to a steam turbine;
   a branching passage (40) that branches off from the steam passage (30a);
   a shutoff valve (32) that intervenes in the branching passage (40); **characterized by**
   a reduced part (31b) that is provided at a part of the branching passage (40) between the steam passage (30a) and the shutoff valve (32) and made by reducing a passage cross section of the branching passage (40).

2. The steam turbine facility according to claim 1, wherein the reduced part (31b) is provided from a predetermined position of the branching passage (40) to the shutoff valve (32).

3. The steam turbine facility according to claim 1, wherein the reduced part (31b) is provided to have a predetermined length from a predetermined position of the branching passage (40) to the shutoff valve side, and a passage cross section of the branching passage (40) on the side closer to the shutoff valve (32) than is the reduced part (31b) is larger than a passage cross section of the branching passage (40) of the reduced part (31b).

4. The steam turbine facility according to any one of claims 1 to 3,
   wherein a part of the branching passage (40) is provided in a pipe wall of a pipe constituting the steam passage (30a).

5. The steam turbine facility according to any one of claims 1 to 3,
   wherein a part of the branching passage (40) on the side closer to the steam passage (30a) than is the reduced part (31b) is composed of a heat conduction member that conducts heat generated on the side closer to the steam passage (30a) than is the reduced part (31b), to the steam passage side.

6. The steam turbine facility according to any one of claims 1 to 5,
   wherein at least a part of the branching passage (40) is extended almost perpendicularly to a flow direction of steam and in an almost horizontal direction, from a lower part of the steam passage (40).

7. The steam turbine facility according to any one of claims 1 to 5,
   wherein at least a part of the branching passage (40) is extended in an almost vertically downward direction from a lower part of the steam passage (40).

**Patentansprüche**

1. Dampfturbinenanlage mit einem Dampfturbinenrohr, wobei das Dampfturbinenrohr aufweist:

   einen Dampfdurchgang (30a), der Dampf von einem Kessel zu einer Dampfturbine führt;
   einem Verzweigungsdurchgang (40), der von dem Dampfdurchgang (30a) abzweigt;
   einem Absperrventil (32), das in den Verzweigungsdurchgang (40) eingreift; **gekennzeichnet durch**
   einen reduzierten Teil (31b), der an einem Teil des Verzweigungsdurchgangs (40) zwischen dem Dampfdurchgang (30a) und dem Absperrventil (32) vorgesehen ist und **durch** Verringern eines Durchgangsquerschnitts des Verzweigungsdurchgangs (40) hergestellt ist.

2. Dampfturbinenanlage nach Anspruch 1,
   wobei der reduzierte Teil (31b) von einer vorbestimmten Position des Verzweigungsdurchgangs (40) zu dem Absperrventil (32) vorgesehen ist.

3. Dampfturbinenanlage nach Anspruch 1,
   wobei der reduzierte Teil (31b) vorgesehen ist, um eine vorbestimmte Länge von einer vorbestimmten Position des Verzweigungsdurchgangs (40) zu der Absperrventilseite aufzuweisen, und wobei ein Durchgangsquerschnitt des Verzweigungsdurchgangs (40) auf der Seite, die näher an dem Absperrventil (32) als der reduzierte Teil (31b) ist, größer als ein Durchgangsquerschnitt des Verzweigungsdurchgangs (40) des reduzierten Teils (31b) ist.

4. Dampfturbinenanlage nach einem der Ansprüche 1 bis 3,
   wobei ein Teil des Verzweigungsdurchgangs (40) in einer Rohrwand eines Rohrs vorgesehen ist, das den Dampfdurchgang (30a) bildet.

5. Dampfturbinenanlage nach einem der Ansprüche 1 bis 3,
wobei ein Teil des Verzweigungsdurchgangs (40) auf der Seite, die näher an dem Dampfdurchgang (30a) als der reduzierte Teil (31b) ist, aus einem Wärmeleitungselement gebildet ist, das Wärme, die auf der Seite erzeugt wird, die näher an dem Dampfdurchgang (30a) als der reduzierte Teil (31b) ist, zu der Dampfdurchgangsseite leitet.

6. Dampfturbinenanlage nach einem der Ansprüche 1 bis 5,
wobei zumindest ein Teil des Verzweigungsdurchgangs (40) nahezu senkrecht zu einer Strömungsrichtung von Dampf und in einer nahezu horizontalen Richtung von einem unteren Teil des Dampfdurchgangs (40) verlängert ist.

7. Dampfturbinenanlage nach einem der Ansprüche 1 bis 5,
wobei zumindest ein Teil des Verzweigungsdurchgangs (40) in einer nahezu vertikal nach unten gerichteten Richtung von einem unteren Teil des Dampfdurchgangs (40) verlängert ist.

**Revendications**

1. Installation de turbine à vapeur comprenant un tuyau de turbine à vapeur, le tuyau de turbine à vapeur comprenant :

   un passage pour la vapeur (30a) qui achemine de la vapeur d'une chaudière à une turbine à vapeur ;
   un passage de bifurcation (40) qui bifurque à partir du passage pour la vapeur (30a) ;
   une soupape d'arrêt (32) qui vient s'intercaler dans le passage de bifurcation (40) ; **caractérisée par**
   une partie réduite (31b) qui est prévue sur une partie du passage de bifurcation (40) entre le passage pour la vapeur (30a) et la soupape d'arrêt (32) et réalisée par la réduction d'une section transversale de passage du passage de bifurcation (40).

2. Installation de turbine à vapeur selon la revendication 1,
dans laquelle la partie réduite (31b) s'étend depuis une position prédéterminée du passage de bifurcation (40) jusqu'à la soupape d'arrêt (32).

3. Installation de turbine à vapeur selon la revendication 1,
dans laquelle la partie réduite (31b) est prévue de comprendre une longueur prédéterminée depuis une position prédéterminée du passage de bifurcation (40) jusqu'à la soupape d'arrêt, et une section transversale de passage du passage de bifurcation (40) sur le côté plus près de la soupape d'arrêt (32) que ne l'est la partie réduite (31b), est plus grande qu'une section transversale de passage du passage de bifurcation (40) de la partie réduite (31b).

4. Installation de turbine à vapeur selon l'une quelconque des revendications 1 à 3,
dans laquelle une partie du passage de bifurcation (40) est prévue dans une paroi d'un tuyau constituant le passage pour la vapeur (30a).

5. Installation de turbine à vapeur selon l'une quelconque des revendications 1 à 3,
dans laquelle une partie du passage de bifurcation (40) sur le côté plus près du passage pour la vapeur (30a) que ne l'est la partie réduite (31b), est composée d'un élément de thermoconduction qui conduit la chaleur générée sur le côté plus près du passage pour la vapeur (30a) que ne l'est la partie réduite (31b), vers le côté du passage pour la vapeur.

6. Installation de turbine à vapeur selon l'une quelconque des revendications 1 à 5,
dans laquelle au moins une partie du passage de bifurcation (40) s'étend presque perpendiculairement à une direction d'écoulement de la vapeur et dans une direction presque horizontale à partir de la partie inférieure du passage pour la vapeur (40).

7. Installation de turbine à vapeur selon l'une quelconque des revendications 1 à 5,
dans laquelle au moins une partie du passage de bifurcation (40) s'étend dans une direction descendante presque verticalement à partir de la partie inférieure du passage pour la vapeur (40).

FIG. 1

# FIG. 2

# FIG. 3

# FIG. 4

# FIG. 5

# FIG. 6

# FIG. 7

2

30

30a

32  31c  31b  31a  30b

50

41

# FIG. 8

3

30

30a

32  70  90  80  30b

60

42

# FIG. 9

# FIG. 10

$P_I = Pi + Pr$ — REGION I   $P_{II} = Pt$ — REGION II

30a

$Pi, Ui$   $Pt, Ut$

$S_0$

$Pr, Ur$

$P_1, U_1$

31a   $S_1$   $L_1$

$(m<1)$ $mS_1$

40   31b   $L_2$

$P_2$

32

# FIG. 11

$P_I = Pi + Pr$

30a

REGION I

$P_{II} = Pt$

REGION II

Pi, Ui

$S_0$

Pt, Ut

Pr, Ur

$P_1, U_1$

31a

$S_1$

$L_1$

$L_2$

(m<1) $mS_1$

31b

31c

$S_1$

$L_3$

41

$P_2$

32

# FIG. 12

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2029830 A

- DE 102012207176 A1

**Non-patent literature cited in the description**

- **ARAKAWA ; KAWAHASHI.** *Transaction of the Society of Mechanical Engineers,* 1996, vol. 62 (598, B), 2238-2245

- **ICHIKAWA ; TAKAYAMA.** *Transaction of the Society of Mechanical Engineers,* 1973, vol. 39 (325), 2807-2815
- **SPRENGER, H.** On thermal effects in resonance tubes. *NTRS,* 1964